Europäisches Patentamt

(19) European Patent Office

Office européen des brevets

(11) Publication number: **0 141 292**
**A2**

## (12) EUROPEAN PATENT APPLICATION

(21) Application number: **84111972.0**

(22) Date of filing: **05.10.84**

(51) Int. Cl.⁴: **F 16 H 5/64**

(30) Priority: **06.10.83 JP 185997/83**

(43) Date of publication of application:
**15.05.85 Bulletin 85/20**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Shibayama, Takashi**
**No. 935, Kagawa**
**Chigasaki City(JP)**

(72) Inventor: **Sugano, Kazuhiko**
**Totsuka-hairaizu B1022 No. 884-1, Kamikurata-cho**
**Totsuka-ku Yokohama City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Shift valve for hydraulic control system for automatic transmission.**

(57) According to the present invention, an axial width of one of two walls that separate three ports each other is longer than an axial width of the other wall. That is, a shift valve according to the present invention for a hydraulic control system for an automatic transmission comprises a valve bore formed with a first port connected to a source of oil pressure, a second port connected to a clutch, and a third port for discharging oil, a spool slidably fit in the valve bore and shiftable between a position where the first port is allowed to communicate with the second port and another position where the second port is allowed to communicate with the third port, and an axial width of the wall separating the first port from the second port is longer than the axial width of the wall separating the second port from the third port.

FIG.2

SHIFT VALVE FOR HYDRAULIC CONTROL SYSTEM FOR AUTOMATIC
TRANSMISSION

BACKGROUND OF THE INVENTION

The present invention relates to a shift valve for a hydraulic control system for an automatic transmission.

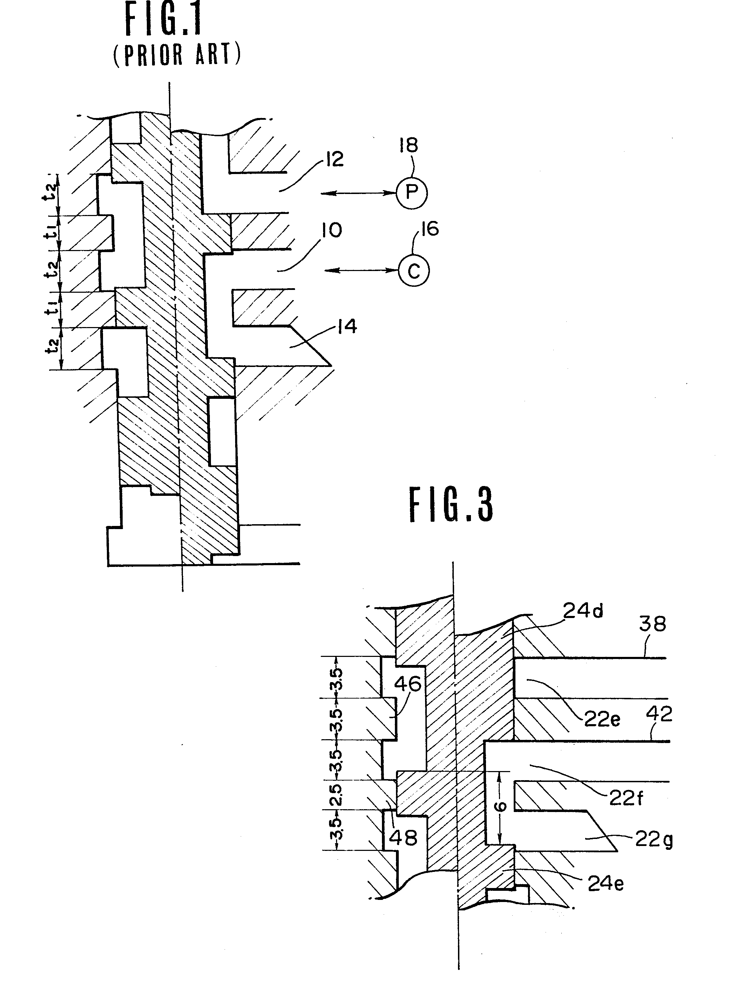

Conventionally, a switching valve as shown in Fig. 1 has been used in order to connect a port 10 selectively to a port 12 or a port 14. If such a switching valve is used as a shift valve for a hydraulic control system for an automatic transmission, the port 10 is connected to a clutch, the port 12 is connected to a pump 18, and the port 14 is used as a drain port. In this conventional shift valve, an axial width of a wall separating adjacent two ports from each other and defining them and an axial width of each port are basically same. For example, the axial width of the wall is 3 mm and the axial width of the port is 3.5 mm. However, this conventional shift valve poses a problem as follows. That is, when the spool assumes a right half position as viewed in Fig. 1, the port 10 connected to the clutch 16 is allowed to communicate with the drain port 14 and it is prevented from communicating with the port 12. However, oil tends to pass through a small clearance defined between inner periphery of the valve bore and outer periphery of the spool. This small clearance cannot be decreased below a certain level which has been determined so as to ensure smooth movement of the spool and taking manufacturing error into account. If flow of oil passing through this clearance increases, the oil enters into a cylinder of the clutch, causing the clutch to drag. That is, if the oil remains in the cylinder of the clutch which is rotating, a force is created due to centrifugal force which biases a piston of the clutch, thus causing the clutch to drag. If this happens, a vehicle starts against the intention of a driver or clutch plates get burnt. In order to cope with this problem, the clutch is equipped with a device to discharge oil from a cylinder chamber during operation at high speed revolutions. However, if the flow rate of discharging oil is exceeded by the flow rate of inflowing leaking oil having past through the clearance between the inner periphery of the valve bore and the outer periphery of the spool, the clutch will drag.

In order to reduce the flow rate of the leaking oil, one measure is to decrease the clearance between the inner periphery of the valve bore and the outer periphery of the spool or another measure is to increase the axial width of this clearance. However, if a difference between the inner periphery of the valve bore and the outer periphery of the spool is so small, smooth movement of the spool is not ensured over the whole temperature range due to a difference in thermal expansion coefficiency between them or the spool is likely to stick when dust plugs in the clearance. Moreover, the size of the clearance above a certain value must be maintained so as to absorb manufacuturing error and thus the clearance cannot be decreased below this certain value. On the other hand, for inceasing the axial width of the clearance, the stroke of the spool must be increased accordingly and the axial width of each of all walls must be increased accordingly. As a result, the hydraulic control system becomes bulky.

## SUMMARY OF THE INVENTION

An object of the present invention is to provide a shift valve for a hydraulic control system for an automatic transmission wherein the leakage of oil passing through a clearance defined between an inner periphery of a valve bore and an outer peripheral wall of a spool is decreased so as to prevent the occurrence of drag in a clutch.

According to the present invention, the above object is accomplished by setting such that an axial width of one of two walls that separates three ports each other is longer than an axial width of the other wall. That is, a shift valve according to the present invention for a hydraulic control system for an automatic transmission comprises a valve bore formed with a first port connected to a source of oil pressure, a second port connected to a clutch, and a third port for discharging oil, a spool slidably fit in the valve bore and shiftable between a position where the first port is allowed to communicate with the second port and another position where the second port is allowed to communicate with the third port, and an axial width of the wall separating the first port from the second port is longer than the axial width of the wall separating the second port from the third port.

## BRIEF DESCRIPTION OF THE DRAWINGS

Fig. 1 is a sectional diagram showing the previously discussed conventional shift valve for a hydraulic control system for an automatic transmission;

Fig. 2 is a sectional diagram showing a shift valve for a hydraulic control system for an automatic transmission according to the present invention; and

Fig. 3 is an enlarged view of the shift valve shown in Fig. 2.

DETAILED DESCRIPTION OF THE INVENTION

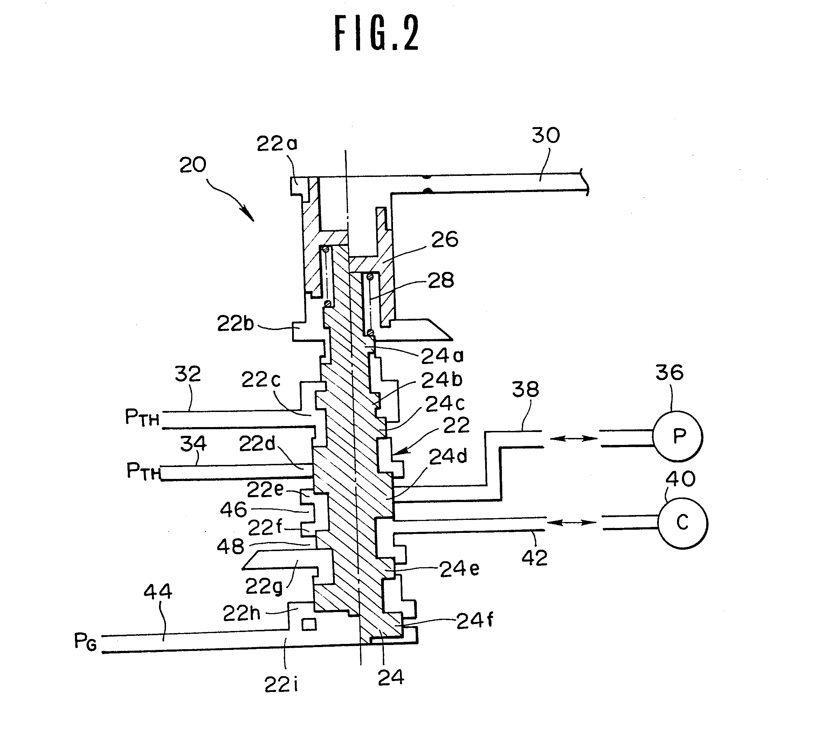

Referring to Figs. 2 and 3, the present invention is specifically described.

Fig. 2 shows a first embodiment of a shift valve for a hydraulic control system for an automatic transmission. This shift valve 20 comprises a valve bore 22, a spool 24 slidably fit in the valve bore 22, a plug 26 similarly slidably fit in the valve bore 22, and a spring 28 arranged between the spool 24 and the plug 26. The valve bore 22 includes ports 22a to 22i, whereas the spool 24 includes corresponding lands 24a to 24f. The port 22a is connected to an oil conduit 30 to which an oil pressure is supplied during a running range where engine braking is required. The ports 22b and 22g are drain ports, respectively. The ports 22c and 22d are supplied with throttle pressure $P_{TH}$ from oil conduits 32 and 34, respectively. The port 22e is connected to an oil conduit 38 which is connected to a source of oil pressure, i.e., a pump 38, under certain condition. The port 22f is connected to an oil conduit 42 which is connected to a clutch 40. The ports 22h and 22i are supplied with governor pressure $P_G$. An axial width, i.e., a length measured along the axis of the valve bore, of a wall 46 which separates the port 22e from the port 22f is longer than the axial width of a wall 48 which separates the port 22f from the port 22g. The relationship is again described based on Fig. 3.

The spool 24 is movable so as to balance a downward force resulting from a force due to a spring 28, a force due to the throttle pressure $P_{TH}$ acting in the ports 22c and 22d and the governor pressure $P_G$ acting in the port 22h with an upward force due to the governor pressure acting in the port 22i, and it is shiftable between a down position as indicated by a right half as viewed in Fig. 2 and an up position as indicated by a left half. (When oil pressure is supplied to the port 22a from the oil conduit 30, the shift valve 20 always assumes the down position because the plug 26 has a large pressure acting area). Owing to the shifting action of the spool 24, the port 22f is allowed to communicate with the port 22g or 22e selectively. Thus, when the spool 24 assumes the down position, clutch 40 is drained via the oil conduit 42, port 22f, and port 22g. When the spool 24 assumes the up position, the oil pressure from the pump 36 is supplied to the clutch 40 via the oil conduit 38, port 22e, port 22f and oil conduit 42. When the spool 24 assumes the down position, since the port 22e and the port 22f are separated by the wall 46 having a relatively long axial width, the leakage of oil from the port 22e to the port 22f is greatly decreased. Therefore, a great quantity of leaked oil will no longer be supplied to the clutch 40 via the oil conduit 42 so that drag in the clutch 40 which has been experienced at high speed revolutions is securely prevented. On the other hand, the port 22f and the port 22g are separated by the wall 48 having relatively short axial width when the spool 24 assumes the up position. Thus, although the leakage of oil increases accordingly as compared to the conventional one, the pump can supply enough oil to compensate for

0141292

-6-

the increased leakage so that no side effect that the hydraulic fluid pressure applied to the clutch 40 drops will take place.

The dimensional relationship among the ports 22e, 22f, 22g, walls 46, 48 is illustrated in an enlarged scale in Fig. 3. Axial width of each of the ports 22e, 22f and 22g is 3.5 mm, axial width of the wall 46 is 3.5 mm, axial dimension of the wall 48 is 2.5 mm. (As compard to this relationship, the axial dimension of the walls 46 and 48 was 3.0 mm in the conventional shift valve.) The stroke of the spool 24 is 6.0 mm. (The stroke of the spool 24 is the same in the conventional case where there is no difference in axial width between walls 46 and 48.) As viewed in Fig. 3, the up position is indicated by left half, while the down position is indicated by the right half. Apparent from this illustration, when the spool 24 assumes the down position, a sealed area having an axial length corresponding to the axial width 3.5 mm of the wall 46 is provided, whereas when it assumes the up position, the sealed area having an axial length corresponding to the axial width 2.5 mm of the wall 48 is provided. Flow cross sectional area of each of the ports is not considerably decreased by the lands of the spool when the spool 24 assumes any one of the up position and down position.

WHAT IS CLAIMED

1.   A shift valve for a hydraulic control system for an automatic transmission including a clutch and a source of oil pressure, comprising:

means defining a valve bore formed with first, second and third ports, said first port being connected to the source of oil pressure, said second port being connected to the clutch and said third port being for discharging oil; and

a spool slidably fit in said valve bore and shiftable between a position where said first port is allowed to communicate with said second port and another position where said second port is allowed to communicate with said third port;

said valve bore defining means having a plurality of walls including a first wall separating said first port from said second port and a second wall separating said second port from said third port, said first wall having an axial width longer than an axial width of said second wall.

# FIG.1
(PRIOR ART)

12
18
P

10
16
C

14

$t_1$ $t_2$
$t_2$ $t_1$
$t_1$ $t_2$
$t_2$ $t_1$
$t_2$

# FIG.3

24d
38
46
22e
42
3.5
3.5
3.5
3.5
2.5
3.5
6
22f
48
22g
24e

# FIG.2